# EUROPÄISCHE PATENTSCHRIFT

(11) **EP 3 537 102 B1**
(45) Veröffentlichungstag und Bekanntmachung des Hinweises auf die Patenterteilung: **13.05.2020**
(21) Anmeldenummer: 18160062.8
(22) Anmeldetag: 05.03.2018
(51) Int. Cl.: G01B 21/04, G05B 19/401

(54) **VERFAHREN UND ANORDNUNG ZUM ERHÖHEN DES DURCHSATZES BEI EINER AUSREICHENDEN MESSGENAUIGKEIT BEI DER WERKSTÜCKVERMESSUNG**
METHOD AND ASSEMBLY FOR INCREASING THROUGHPUT WITH SUFFICIENT ACCURACY WHEN MEASURING WORKPIECES
PROCÉDÉ ET DISPOSITIF D'AUGMENTATION DU RENDEMENT POUR UNE PRÉCISION SUFFISANTE LORS DE LA MESURE DE PIÈCES À USINER

(43) Veröffentlichungstag der Anmeldung: 11.09.2019
(73) Patentinhaber: Carl Zeiss Industrielle Messtechnik GmbH, 73447 Oberkochen (DE)
(72) Erfinder: Grünewald, Tom, 73431 Aalen (DE)
(74) Vertreter: Patentanwälte Bressel und Partner mbB

(56) Entgegenhaltungen:
- WO-A1-2016/169589
- DE-A1-102014 112 396
- DE-A1-102015 114 715

## Beschreibung

Die Erfindung betrifft ein Verfahren und eine Anordnung zum Erhöhen des Durchsatzes bei der Werkstückvermessung. Insbesondere betrifft die Erfindung die Wahl von wenigstens einem Vermessungsparameter eines Koordinatenmessgerätes, sodass ein hoher Durchsatz bei einer ausreichenden Messgenauigkeit ermöglicht wird. Geeignete Werte des Vermessungsparameters können im Wesentlichen oder vollständig automatisch im Rahmen von Testmessungen identifiziert und für das zukünftige Vermessen baugleicher Werkstücke verwendet werden.

Das Vermessen von Werkstücken mittels Koordinatenmessgeräten ist bekannt. Koordinatenmessgeräte dienen allgemein dazu, eine Oberfläche von Werkstücken taktil oder berührungslos zu erfassen und darauf basierend räumliche Positionen (d. h. Koordinaten) der erfassten Messpunkte an der Oberfläche zu bestimmen. Typischerweise wird hierbei eine sensorische Einheit zum Aufnehmen von Messsignalen durch das Koordinatenmessgerät relativ zu dem zu vermessenden Werkstück bewegt. Die sensorische Einheit kann zum Beispiel in Form eines taktilen Messtasters oder eines berührungslos erfassenden optischen Sensors realisiert sein.

Je nach dem zu vermessenden Werkstück und der konkreten Messaufgabe können verschiedene Betriebsparameter des Koordinatenmessgeräts gezielt eingestellt werden. Nach Maßgabe der Betriebsparameter wird dann die Werkstückvermessung durchgeführt, weshalb diese im Folgenden auch als Vermessungsparameter bezeichnet werden. Beispiele für derartige Parameter sind z.B. eine Messgeschwindigkeit, eine Messkraft oder ein Suchweg.

Ein allgemeiner Zielkonflikt beim Vermessen von Werkstücken besteht darin, dass die Messergebnisse eine möglichst hohe Genauigkeit aufweisen sollen. Hierfür wird in der Regel eine vergleichsweise lange Messdauer benötigt. Andererseits soll insbesondere im Rahmen einer industriellen und vor allem seriellen Werkstückfertigung ein möglichst hoher Durchsatz von Werkstücken durch das Koordinatenmessgerät ermöglicht werden. Dies erfordert jedoch, dass die Messdauer möglichst gering gehalten wird.

Der Durchsatz betrifft dabei die Anzahl an Werkstücken, die innerhalb einer vorbestimmten Zeitdauer oder Zeiteinheit vermessbar sind (z.B. die vermessbare Werkstückanzahl pro Stunde). Unter einer seriellen Werkstückfertigung und auch einem damit einhergehenden seriellen Vermessen kann ein getaktetes, mehrfach aufeinanderfolgendes und/oder ineinander übergehendes Fertigen bzw. Vermessen verstanden werden.

Um geeignete Werte für die Vermessungsparameter eines Koordinatenmessgeräts zu wählen, welche eine ausreichende Genauigkeit bei einem hohen Durchsatz ermöglichen, muss ein Anwender bisher auf Erfahrungswerte, Richtlinien oder gegebenenfalls auch Normen zurückgreifen. Ferner existieren Softwarelösungen in Form von Expertensystemen, welche zum Beispiel in Kenntnis des zu vermessenden Werkstücks und dem verwendeten Koordinatenmessgerät Empfehlungen hinsichtlich geeigneter Vermessungsparameterwerte geben können.

Mit diesen Ansätzen gelingt es bisher jedoch nicht, den vorstehenden Zielkonflikt zufriedenstellend zu lösen, insbesondere da bei einem Erhöhen des Durchsatzes eine ausreichende Messgenauigkeit nicht immer sichergestellt werden kann.

Technologischer Hintergrund findet sich in der WO 2006/169589 A1, DE 10 2014 112 396 A1 und DE 10 2015 114 715 A1.

Eine Aufgabe der vorliegenden Erfindung ist daher, den Durchsatz von Werkstücken bei der Werkstückvermessung mit einer ausreichenden Messgenauigkeit zu erhöhen.

Diese Aufgabe wird durch ein Verfahren und eine Anordnung gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Der Erfinder hat allgemein erkannt, dass ein Bedarf dafür besteht, geeignete Vermessungsparameter zum Lösen des geschilderten Zielkonflikts zu ermitteln, wobei dies bevorzugt in möglichst automatisierter Weise erfolgen soll (d. h. ohne umfangreiche oder auch im Wesentlichen gänzlich ohne Benutzereingaben). Insbesondere wird ein iteratives Verändern von Vermessungsparametern vorgeschlagen, was zumindest so lange ausgeführt werden kann, bis ein vorbestimmtes Kriterium nicht mehr erfüllt ist. Die Iteration ist dabei vorzugsweise derart gewählt, dass ein Vermessungsparameterwert erzielt wird, der einen möglichst hohen Durchsatz ermöglicht. Durch Überwachen des Kriteriums kann aber sichergestellt werden, dass mit diesem Vermessungsparameterwert nach wie vor eine ausreichende Messgenauigkeit erzielbar ist.

Im Detail wird ein Verfahren zum Erhöhen des Durchsatzes bei der Werkstückvermessung mit einem Koordinatenmessgerät vorgeschlagen, wobei das Koordinatenmessgerät dazu eingerichtet ist, ein Werkstück zu vermessen, wobei die Vermessung durch wenigstens einen Vermessungsparameter beschreibbar ist, dessen Wert veränderlich ist,
und wobei das Verfahren umfasst:
a) Festlegen eines Ausgangswerts des wenigstens einen Vermessungsparameters;
b) Vermessen eines Werkstücks, wobei ein festgelegter Wert des wenigstens einen Vermessungsparameters gültig ist;
c) Ermitteln eines Werts von wenigstens einem vorbestimmten Prüfmerkmal basierend auf Ergebnissen des Vermessens;
d) Überprüfen, ob das wenigstens eine Prüfmerkmal ein vorbestimmtes Iterationskriterium erfüllt, und wenn dies der Fall ist:
e) Verändern und somit Festlegen des Werts des Vermessungsparameters oder Verändern und somit Festlegen des Werts zumindest eines der Vermessungsparameter und Wiederholen der Maßnahmen b) bis d).

Das Koordinatenmessgerät kann gemäß jeglicher gängigen Bauart ausgebildet sein und allgemein für eine taktile und/oder berührungslose Werkstückvermessung eingerichtet sein. Bei dem Werkstück kann es sich um ein industriell gefertigtes Werkstück handeln.

Das Verfahren kann allgemein dazu dienen, geeignete Vermessungsparameterwerte für Werkstücke einer bestimmten Bauart oder eines bestimmten Typs zu ermitteln. Hierfür kann das Verfahren zunächst auf ein Werkstück angewandt werden, dessen Eigenschaften bekannt sind und/oder das mit einer ausreichenden und gewünschten Genauigkeit gefertigt wurde. Beispielsweise kann dieses Werkstück sämtliche vorgeschrieben Toleranzen für die zu vermessenden Prüfmerkmale einhalten. Die Vermessungsparameterwerte, die anhand dieses bevorzugten und/oder besonders genauen Werkstücks ermittelt wurden, können anschließend zum Vermessen weiterer vergleichbarer Werkstücke verwendet werden. Das zuerst vermessene und besonders genaue Werkstück kann auch als Prüfkörper, Prüfwerkstück oder Meisterteil beschreiben werden.

Ein Vorteil dieser Variante besteht darin, dass etwaige Messungenauigkeiten aufgrund der bevorzugten Eigenschaften des Werkstücks im Wesentlichen oder ausschließlich auf die Vermessungsparameterwerte zurückgeführt werden können. Anders ausgedrückt kann mit einer hohen Wahrscheinlichkeit darauf geschlossen werden, dass die Wahl bestimmter Vermessungsparameterwerte ungeeignet ist, wenn die Messergebnisse eine unzureichende Genauigkeit aufweisen oder anzeigen (beispielsweise ein Nichteinhalten von Toleranzen anzeigen, obwohl das Werkstück mit der entsprechenden Genauigkeit gefertigt wurde).

Das Verfahren kann allgemein automatisiert ausgeführt werden. Sämtliche Maßnahmen können folglich von einer Steuerungseinrichtung und/oder einer Prozessoreinheit des Koordinatenmessgeräts ausgeführt oder veranlasst werden. Die Steuerungseinrichtung kann allgemein elektronisch und/oder digital betreibbar sein. Gesonderte Benutzereingaben oder -bedienungen können nicht erforderlich sein, erfindungsgemäß aber ebenso erfolgen oder ermöglicht werden, zum Beispiel im Rahmen der Maßnahmen a) und e).

Das automatisierte Ausführen der Maßnahmen kann zum Beispiel ein automatisiertes Ermitteln und Überprüfen gemäß den Maßnahmen c) und d) umfassen, wofür Berechnungen und/oder Auswertungen auf Basis hinterlegter Programmanweisungen ausgeführt werden können. Das Festlegen und/oder Verändern von Vermessungsparameterwerten gemäß der Maßnahme e) kann nach Maßgabe von Entscheidungsregeln erfolgen, die wiederum in Form von Programmanweisungen hinterlegt sein können. Alternativ kann hierfür eine (digitale) Wertetabelle bereitgestellt sein, aus der neue bzw. veränderte Werte ausgelesen werden können.

Im Rahmen der Maßnahme b) kann ein allgemein automatisierter Vermessungsbetrieb des Koordinatenmessgeräts ausgeführt werden, wie er bei bestehenden Lösungen bereits zum Einsatz kommt. Beim erstmaligen Ausführen wird hierbei der Anfangswert zugrunde gelegt. Bei einem späteren Ausführen wird der im Rahmen der Maßnahme e) veränderte Wert zugrunde gelegt.

Sofern nicht anders angegeben oder ersichtlich, ist das Auflisten der Verfahrensmaßnahmen a)-e) nicht als Definition einer zwingenden zeitlichen Reihenfolge zu verstehen. Zumindest die Maßnahmen b) und c) können beispielsweise wenigstens teilweise parallel oder zeitlich überlappend ausgeführt werden.

Bei dem Vermessungsparameter kann es sich insbesondere um einen der folgenden handeln:
- Eine Messgeschwindigkeit: Hierunter kann zum Beispiel die Relativgeschwindigkeit zwischen einem Werkstück und einer sensorischen Einheit (zum Beispiel einem Messtaster) des Koordinatenmessgeräts verstanden werden. Auch eine berührungslose Messgeschwindigkeit durch Bewegen einer optischen sensorischen Einheit und/oder eines etwaigen optischen Erfassungsfeldes hiervon relativ zu einem Werkstück kann betrachtet werden. Die Messgeschwindigkeit kann auch als (taktile oder berührungslose) Abtastgeschwindigkeit bezeichnet werden. Allgemein ermöglichen hohe Messgeschwindigkeiten einen hohen Durchsatz, bedingen hierdurch aber auch ein größeres Risiko von Ungenauigkeiten.

- Eine Stillstandszeit (zum Beispiel resultierend aus dem Anhalten an Synchronisationspunkten): Eine Stillstandszeit kann in bekannter Weise dann auftreten, wenn bei einem Abfahren einer bestimmten Messpunktreihenfolge entlang einer Werkstückoberfläche an sogenannten Synchronisationspunkten bewusst angehalten wird, um eine aktuelle Position des Koordinatenmessgeräts und/oder von dessen sensorischer Einheit auszulesen. Allgemein ermöglichen geringe Stillstandszeiten einen hohen Durchsatz, bedingen hierdurch aber auch ein größeres Risiko von Ungenauigkeiten.
- Eine Antastgeschwindigkeit: Die Antastgeschwindigkeit betrifft die Geschwindigkeit, mit der eine sensorische Einheit und insbesondere ein Messtaster sich einem vorbestimmten Messpunkt bzw. Abtastpunkt nähert. Allgemein ermöglichen hohe Antastgeschwindigkeiten einen hohen Durchsatz, bedingen hierdurch aber auch ein größeres Risiko von Ungenauigkeiten.
- Eine Messkraft: Die Messkraft betrifft die Kraft, mit der eine sensorische Einheit des Koordinatenmessgeräts und insbesondere ein Messtaster an dem zu vermessenden Werkstück anliegt oder, anders ausgedrückt, sich an dem Werkstück abstützt. Je nach dem Material des zu vermessenden Werkstücks können geringe Messkräfte bevorzugt sein, zum Beispiel um Beschädigungen einer vergleichsweise weichen Werkstückoberfläche (bzw. ein Hängenbleiben eines Messtasters darin) zu vermeiden und allgemein die Messgenauigkeit zu erhöhen. Allerdings können geringe Messkräfte die anwendbare Messgeschwindigkeit begrenzen, da z.B. die Gefahr des Abhebens eines Messtasters von der Werkstückoberfläche besteht. Somit kann sich die Messkraft je nach der aktuellen Messaufgabe vor allem auf die Genauigkeit aber auch zumindest mittelbar auf die anwendbare Messgeschwindigkeit und somit den erzielbaren Durchsatz auswirken.
- Eine Beschleunigung: Beschleunigungen im Rahmen des Abtast- bzw. Messvorgangs sind insbesondere in Form anfänglicher Beschleunigungen relevant, mit denen die für ein Vermessen ausgeführte Relativbewegung (oder auch Abtastbewegung) zwischen der sensorischen Einheit und dem Werkstück in Gang gesetzt wird. Allgemein ermöglichen hohen Beschleunigungen einen hohen Durchsatz, bedingen hierdurch aber auch ein größeres Risiko von Ungenauigkeiten, insbesondere zu Beginn eines Messvorgangs.

Prinzipiell kann die Erfindung auch für bzw. mit anderen Vermessungsparametern angewandt werden. Insbesondere können die Vermessungsparameter jeglichen Betriebsparameter eines Koordinatenmessgeräts betreffen, welche für das Vermessen von einem Werkstück wählbar und/oder veränderbar sind. Zusätzlich oder alternativ können sämtliche Betriebsparameter eines Koordinatenmessgeräts als Vermessungsparameter betrachtet werden, welche sich prinzipiell auf die Messgenauigkeit auswirken können.

Unter einem Prüfmerkmal wird gemäß herkömmlichen Definitionen ein zu überprüfendes oder zu vermessendes Merkmal und insbesondere ein geometrisches Merkmal (oder eine geometrische Eigenschaft) des Werkstücks verstanden. Beispiele für ein Prüfmerkmal sind die Rundheit eines Werkstückbereichs, die Parallelität zwischen zwei Werkstückflächen, die Ebenheit oder Rauheit der Werkstückoberfläche oder die Formabweichung eines Werkstückbereichs (zum Beispiel von einer vorgegebenen Form wie einem Kreis). In Schritt c) kann basierend auf den ermittelten Koordinaten, welche das Messergebnis bilden können, somit der Wert eines entsprechenden Prüfmerkmals hergeleitet oder ermittelt werden.

Ein Prüfelement betrifft hingegen denjenigen Bereich oder dasjenige geometrische Element des Werkstücks, der bzw. das hinsichtlich seiner Eigenschaften und insbesondere hinsichtlich zumindest einem Prüfmerkmal überprüft werden soll. Beispiele für ein Prüfelement sind zum Beispiel eine Durchmesserstufe, eine Kante oder dergleichen.

Unter dem Iterationskriterium kann ein Kriterium verstanden werden, das erfüllt sein muss, um eine weitere Iteration (bzw. einen weiteren Iterationszyklus) oder auch einen weiteren Vermessungszyklus durchzuführen. Eine Iteration bzw. ein Vermessungszyklus kann dabei die Maßnahmen e) sowie b) bis d) umfassen, wobei zu Beginn zunächst ein neuer Vermessungsparameterwert gemäß Maßnahme e) festgelegt wird. Ist das Iterationskriterium nicht erfüllt, was im Rahmen der Maßnahme d) allgemein ebenso festgestellt werden kann, kann vorgesehen sein, die Maßnahme e) nicht erneut auszuführen und/oder nur unter den nachstehend erläuterten weiteren Voraussetzungen auszuführen.

Das Iterationskriterium betrifft das Erhalten oder Nichterhalten akzeptabler oder zulässiger Werte eines Prüfmerkmals. Zulässige Werte des Prüfmerkmals können vorab hinterlegt werden (d. h. vor dem Durchführen des Verfahrens oder auch im Rahmen der Maßnahme a)). Dies kann durch einen Anwender erfolgen oder automatisch durch Berechnen oder Auslesen geeigneter Werte aus einer Datenbank.

Das Verändern des Werts des Vermessungsparameters kann allgemein ein Erhöhen oder Verringern dieses Werts betreffen. Bestimmte Ausführungsformen des Verfahrens und der Anordnung sehen vor, dass stets nur eine der Varianten ausgeführt wird, also bei jeder Iteration der Wert gegenüber dem jeweils vorherigen Wert erneut erhöht oder erneut verringert wird. Ebenso kann aber vorgesehen sein, beide Varianten auszuführen (also sowohl ein Erhöhen als auch ein Verringern), was z.B. im Rahmen verschiedener Iterationszyklen erfolgen kann.

Eine Ausführungsform des Verfahrens und der Anordnung sieht folglich vor, dass dann, wenn das Iterationskriterium erfüllt ist, der Wert des Vermessungsparameters im Rahmen der Maßnahme e) erhöht wird.

Wie geschildert, kann dies ein stetes Erhöhen in sämtlichen Iterationszyklen betreffen oder auch eine lediglich sporadisches Erhöhen in nur einzelnen Iterationszyklen. Insbesondere kann aber vorgesehen sein, dass die Iterationszyklen oder, anders ausgedrückt, die Anzahl der Maßnahmen e), in denen der Wert des Vermessungsparameters erhöht wird, eine Anzahl von etwaigen Verringerungen des Vermessungsparameterwerts übersteigt und vorzugsweise deutlich übersteigt (z.B. um einen Faktor von wenigstens 5 oder wenigstens 10). Beispielsweise kann das Erhöhen als das standardgemäßes Vorgehen im Rahmen der Maßnahme e) definiert sein und ein etwaiges Verringern nur in vorbestimmten Ausnahmesituationen erfolgen.

Das Erhöhen des Vermessungsparameterwerts oder allgemein das Verändern im Rahmen von Maßnahme e) kann vorsehen, den Wert bei jeder Iteration um den gleichen Betrag zu verändern (z.B. jedes Mal um 10 % gegenüber dem vorherigen Wert zu erhöhen oder zu verringern). Dies ermöglicht ein gleichmäßiges Abdecken und Erfassen des möglichen Wertespektrums des Vermessungsparameters. Alternativ kann vorgesehen sein, den Wert des Vermessungsparameters im Rahmen der Maßnahme e) verschiedenartig zu verändern. Beispielsweise kann das Ausmaß des Veränderns in Abhängigkeit davon angepasst werden, ob das Iterationskriterium mit einem großen Spielraum oder nur knapp erfüllt wurde. Im letzteren Fall kann dies bedeuten, dass der Vermessungsparameter bereits einen kritischen Wert erreicht hat und deshalb für den nächsten Iterationszyklus nur in geringer Weise verändert werden sollte. Liegt hingegen ein großer Spielraum vor, kann das Verändern entsprechend umfassender ausfallen.

Das Erhöhen des Vermessungsparameterwertes im Rahmen der Maßnahme e) kann insbesondere dann erfolgen, wenn das Iterationskriterium ein Erhalten von zulässigen Werten des Prüfmerkmals betrifft (d.h. erfüllt ist bei zulässigen Werten). Unter zulässigen oder auch akzeptablen Werten des Prüfmerkmals können Werte des Prüfmerkmals oder auch ein Wertebereich des Prüfmerkmals verstanden werden, welche vorab als zulässig oder akzeptabel definiert wurden. Dies kann durch einen Benutzer erfolgen oder auch durch automatisches Auslesen vorab (d. h. vor einem Ausführen des Verfahrens) hinterlegter Informationen. In diesem Zusammenhang kann das Iterationskriterium z.B. als eine zulässige oder akzeptable Formabweichung von weniger als einen bestimmten Wert definiert sein (z.B. weniger als 2,5 um). Übersteigt das entsprechende Prüfmerkmal diesen Wert, kann das Iterationskriterium als nicht erfüllt angesehen werden.

Die Variante, wonach der Vermessungsparameterwert erhöht und das Iterationskriterium das Erhalten von zulässigen Werten betrifft, kann zum Beispiel für Vermessungsparameter relevant sein, bei denen möglichst hohe Werte den Durchsatz optimieren, aber gleichzeitig auch das Risiko von Ungenauigkeiten erhöhen (z.B. die Messgeschwindigkeit). Der Vermessungsparameterwert soll dann also zumindest solange erhöht werden, wie noch eine ausreichende Genauigkeit vorliegt.

Erfindungsgemäß kann auch vorgesehen sein, dass dann, wenn das Iterationskriterium erfüllt ist, der Wert des Vermessungsparameters im Rahmen der Maßnahme e) erhöht wird, wobei das Iterationskriterium erfüllt ist, wenn ein unzulässiger Wert des Prüfmerkmals ermittelt wird. Dies kann zum Beispiel für Vermessungsparameter relevant sein, bei denen möglichst geringe Werte den Durchsatz optimieren, aber gleichzeitig auch das Risiko von Ungenauigkeiten erhöhen (z.B. die Stillstandszeit). Ausgehend z.B. von einem unteren Grenzwert, der einen hohen Durchsatz aber keine ausreichende Messgenauigkeit liefert, kann der Vermessungsparameter dann zumindest solange erhöht werden, bis zulässige Werte des Prüfmerkmals erhalten werden.

Übergeordnet kann im Rahmen der vorliegenden Offenbarung vorgesehen sein, den Ausgangswert des Vermessungsparameters derart festzulegen, dass dieser mit einem unteren oder oberen Grenzwert des Vermessungsparameters zusammenfällt. Der untere und obere Grenzwert können von einem Benutzer vorgegeben oder aus vorab hinterlegten Informationen automatisch ermittelt werden. Der untere und obere Grenzwert können in Anbetracht einer bestimmten Messaufgabe vorgegeben werden oder aufgrund von Eigenschaften des Koordinatenmessgeräts vorgegeben sein. Beispielsweise kann die Messgeschwindigkeit aufgrund des Leistungsspektrums der angetriebenen Achsen eines Koordinatenmessgeräts nach oben und nach unten durch einen entsprechenden Grenzwert beschränkt sein.

Wird der Wert des Vermessungsparameters im Rahmen der Maßnahme e) stets, standardgemäß oder allgemein überwiegend erhöht, kann vorgesehen sein, dass der Ausgangswert im Rahmen der Maßnahme a) als ein unterer Grenzwert des Vermessungsparameters gewählt ist. Insbesondere kann bei dieser Variante der Vermessungsparameter sukzessive erhöht werden, wobei das Iterationskriterium vorzugsweise nur dann erfüllt ist, wenn zulässige Werte des Prüfmerkmals erreicht werden. Hierfür kommen zum Beispiel Vermessungsparameter wie eine Vermessungsgeschwindigkeit oder eine Beschleunigung in Betracht, die bei einem Erhöhen auch das Risiko von Ungenauigkeiten steigern. Derartige Vermessungsparameter können folglich von ihrem unteren Grenzwert aus sukzessive erhöht werden, solange das Iterationskriterium erfüllt ist.

Gemäß einer alternativen Variante des Verfahrens und der Anordnung ist vorgesehen, dass dann, wenn das Iterationskriterium erfüllt ist, der Wert des Vermessungsparameters im Rahmen der Maßnahme e) verringert wird. Erneut kann vorgesehen sein, dass dies im Rahmen der Maßnahme e) stets ausgeführt wird oder zumindest über einen gesamten Verfahrensdurchgang betrachtet in überwiegender Weise ausgeführt wird (d.h. der Wert wird deutlich öfter verringert als erhöht, z.B. um einen Faktor von wenigstens 5 oder 10 öfter verringert). Ferner kann das Verringern als standardgemäßes Vorgehen im Rahmen der Maßnahme e) definiert sein und ein Erhöhen nur in vorbestimmten Ausnahmesituationen erfolgen. Im Rahmen der Maßnahme a) kann deshalb vorgesehen sein, einen oberen Grenzwert des Vermessungsparameters als Ausgangswert zu wählen, der dann sukzessive verringert wird.

Ferner kann in diesem Zusammenhang vorgesehen sein, dass das Iterationskriterium ein Erhalten von unzulässigen Werten des Prüfmerkmals betrifft (d.h. erfüllt ist bei unzulässigen Werten). Der Vermessungsparameter kann also solange verringert werden, bis erstmals zulässige Werte des Prüfmerkmals erhalten werden. Dies kann erneut für Vermessungsparameter wie die Messgeschwindigkeit relevant sein, die für einen hohen Durchsatz möglichst hohe Werte annehmen.

Erfindungsgemäß kann auch vorgesehen sein, dass dann, wenn das Iterationskriterium erfüllt ist, der Wert des Vermessungsparameters im Rahmen der Maßnahme e) verringert wird, wobei das Iterationskriterium erfüllt ist, wenn ein zulässiger Wert des Prüfmerkmals ermittelt wird. Dies kann erneut für Vermessungsparameter relevant sein, bei denen möglichst geringe Werte den Durchsatz optimieren, aber gleichzeitig auch das Risiko von Ungenauigkeiten erhöhen (z.B. die Stillstandszeit). Ausgehend z.B. von einem oberen Grenzwert, der einen geringen Durchsatz aber eine ausreichende Messgenauigkeit liefert, kann der Vermessungsparameter dann zumindest solange verringert und der Durchsatz erhöht werden, wie noch zulässige Werte des Prüfmerkmals erhalten werden.

Für die Entscheidung, ob der Vermessungsparameterwert erhöht oder verringert werden soll und insbesondere von einem unteren Grenzwert aus erhöht oder von einem oberen Grenzwert aus verringert werden soll, kann in Betracht gezogen werden, welche dieser Maßnahmen voraussichtlich mit einer geringeren Anzahl von Iterationszyklen zum Erfolg führt. Kann z.B. davon ausgegangen werden, dass eine Messgeschwindigkeit in erheblicher Weise erhöht werden muss, bis unzulässige Werte des Prüfmerkmals erreicht werden würden, kann zum Verringern der Anzahl an Iterationen stattdessen ein Verringern ausgehend von dem oberen Grenzwert der Messgeschwindigkeit bevorzugt werden.

Erfindungsgemäß kann deshalb auch vorgesehen sein, dass im Rahmen einer gesonderten Maßnahme ermittelt wird, welche der geschilderten Varianten auszuwählen und wie daraufhin das Iterationskriterium zu definieren ist (also ob ein Erhöhen ausgeführt und Erhalten von zulässigen Werten betrachtet werden soll oder ein Verringern und Erhalten von unzulässigen Werten).

Prinzipiell kann vorgesehen sein, dass dann, wenn im Rahmen der Maßnahme d) ein Nichterfüllen des Iterationskriteriums festgestellt wird, derjenige Vermessungsparameterwert zum Verwenden für zukünftige Werkstückvermessungen identifiziert wird, bei dem das Iterationskriterium zuletzt erfüllt war. Anders ausgedrückt kann derjenige Wert, der zuletzt zu einem gewünschten Ergebnis geführt hat, als bevorzugter Vermessungsparameterwert identifiziert werden.

Dies betrifft insbesondere die Variante, bei der das Iterationskriterium ein Erhalten von zulässigen Werten des Prüfmerkmals betrifft, da der entsprechende Vermessungsparameterwert dann auch in Zukunft zu zulässigen Prüfmerkmalwerten führen würde.

Betrifft das Iterationskriterium ein Erhalten von unzulässigen Werten, kann der das Iterationskriterium zuletzt erfüllende Wert unter Inkaufnahme einer damit einhergehenden Ungenauigkeit ebenfalls akzeptabel sein. Bevorzugt ist in diesem Fall aber vorgesehen, dass dann, wenn im Rahmen der Maßnahme d) ein Nichterfüllen des Iterationskriteriums festgestellt wird, derjenige Vermessungsparameterwert zum Verwenden für zukünftige Werkstückvermessungen identifiziert wird, bei dem das Iterationskriterium zuletzt (oder auch erstmals) nicht erfüllt war. Dies würde erneut bedeuten, dass ein Vermessungsparameterwert ausgewählt wird, bei denen zulässige Werte des Prüfmerkmals erhalten wurden.

Alternativ kann vorgesehen sein, dass dann, wenn im Rahmen der Maßnahme d) ein Nichterfüllen des Iterationskriteriums festgestellt wird, der Wert des Vermessungsparameters wenigstens einmal erneut verändert und dabei vorzugsweise ein Vermessungsparameterwert gewählt wird, der zwischen dem das Iterationskriterium nicht erfüllenden Vermessungsparameterwert und demjenigen Vermessungsparameterwert liegt, bei dem das Iterationskriterium zuletzt erfüllt war. Anders ausgedrückt kann ein Zwischenwert für den Vermessungsparameter gebildet werden, der zwischen den beiden vorangehenden Vermessungsparameterwerten liegt. Das Nichterfüllen des Iterationskriteriums kann eine vorstehend erwähnte vorbestimmte Ausnahmesituation darstellen, bei der von einem standardmäßigen Erhöhen oder Verringern des Vermessungsparameterwerts abgewichen wird, insbesondere um den geschilderten Zwischenwert zu bilden.

Zum erneuten Verändern des Vermessungsparameterwerts kann die Maßnahme e) wenigstens einmal erneut ausgeführt werden. Allgemein können zumindest die Maßnahmen b) und c), optional aber auch d), basierend auf dem erneut geänderten Vermessungsparameterwert noch einmal ausgeführt werden.

Allgemein ermöglicht das vorstehende Vorgehen, dass im Rahmen weiterer Messparameterveränderungen ein optimaler (d.h. den Durchsatz maximal erhöhender) Vermessungsparameterwert noch weiter angenähert werden kann. Anstatt denjenigen Wert zu wählen, bei dem das Iterationskriterium zum ersten Mal erfüllt oder auch nicht erfüllt war, kann hierdurch nämlich eine nochmals feinere Iteration erfolgen, um sich einem Vermessungsparameterwert mit einem möglichst hohen Durchsatz noch einmal genauer anzunähern.

Betrifft das Iterationskriterium ein Erhalten von zulässigen Werten des Prüfmerkmals, kann bei dieser Variante folglich vorgesehen sein, dass dann, wenn ein Vermessungsparameterwert zum ersten Mal zu einem unzulässigen Prüfmerkmalwert führt, dieser Vermessungsparameterwert noch einmal verringert wird. Insbesondere kann ein derartiges Verringern vorgesehen sein, dass der Vermessungsparameterwert zwischen einem das Iterationskriterium zuletzt erfüllenden Vermessungsparameterwert und dem das Iterationskriterium zum ersten Mal nicht erfüllenden Vermessungsparameterwert liegt. Anstatt das Verfahren somit unmittelbar zu beenden und denjenigen Vermessungsparameter als geeignet zu identifizieren, bei dem das Iterationskriterium zuletzt erfüllt war, kann im Rahmen einer erneuten Iteration ein weiterer Versuch unternommen werden, einen Vermessungsparameterwert zu ermitteln, der zu zulässigen Werten führt, aber gegebenenfalls einen höheren Durchsatz ermöglicht. Da dieser weitere Vermessungsparameterwert zwischen den vorangehenden Werten liegt, besteht genauer gesagt die Möglichkeit, einen den Durchsatz nochmals steigernden zulässigen Vermessungsparameterwert zu identifizieren.

Der neue Zwischenwert des Vermessungsparameters kann als Mittelwert zwischen den geschilderten vorangehenden Vermessungsparameterwerten gewählt werden. Wird mit diesem Vermessungsparameterwert das Iterationskriterium erfüllt, kann dieser unmittelbar als ein Wert identifiziert werden, der für zukünftige Werkstückvermessungen verwendet werden soll. Alternativ kann auch noch ein weiteres Verändern des Vermessungsparameterwerte vorgesehen sein, vorzugsweise nicht jedoch über denjenigen Vermessungsparameterwert hinaus, bei dem das Iterationskriterium nicht erfüllt wurde. Insbesondere kann der Vermessungsparameterwert ausgehend von dem Zwischenwert so oft weiter verändert werden (und insbesondere in einer den Durchsatz steigernden Weise verändert werden), bis das Iterationskriterium nicht mehr erfüllt ist.

Wird mit dem Zwischenwert des Vermessungsparameters das Iterationskriterium jedoch nicht erfüllt, kann dieser noch einmal derart verändert werden, dass dieser näher an dem Vermessungsparameterwert liegt, bei dem das Iterationskriterium zuletzt erfüllt war. Dies kann so oft erfolgen, bis das Iterationskriterium zum ersten Mal wieder erfüllt ist. Der Wert, bei dem dies gelingt, kann dann als derjenige Vermessungsparameterwert identifiziert werden, der für zukünftige Werkstückvermessungen zu verwenden ist.

Übergeordnet kann bei den vorstehenden Varianten somit vorgesehen sein, dass das Verfahren zumindest solange ausgeführt wird (und/oder dass der Vermessungsparameterwert zumindest so lange verändert wird), bis wenigstens einmal ein Nichterfüllen des Iterationskriteriums und ein anschließend ein erneutes Erfüllen (d.h. Wiedererfüllen) des Iterationskriteriums erreicht wird. Auch kann vorgesehen sein, dass eine Mindestanzahl an Zyklen (zum Beispiel zwei oder drei) erreicht werden soll, bei denen das Iterationskriterium zunächst nicht und anschließend wieder erfüllt wird.

Wie geschildert, kann als Ausgangswert für den Vermessungsparameterwert ein vorbestimmter unterer oder oberer Grenzwert des Vermessungsparameterwerts gewählt werden. Alternativ kann als Ausgangswert ein Wert zwischen einem vorbestimmten unteren Grenzwert für den Vermessungsparameter und einem vorbestimmten oberen Grenzwert für den Vermessungsparameter gewählt werden. Insbesondere kann der Ausgangswert als ein Mittelwert zwischen derartigen Grenzwerten gewählt werden. Wird das mögliche Wertespektrum des Vermessungsparameters zwischen dem unteren und oberen Grenzwert als ein Wertespektrum von 100 % betrachtet, kann ferner vorgesehen sein, dass der Ausgangswert als ein Wert gewählt wird, der nicht näher als 25 % oder nicht näher als 40 % an einem der Grenzwerte liegt. Der Mittelwert würde in diesem Fall bei 50 % liegen. Mit anderen Worten kann der Ausgangswert somit auch außermittig und nicht als Mittelwert gewählt sein.

Durch Wählen des Ausgangswerts als ein Wert zwischen den Grenzwerten kann allgemein die Anzahl an möglichen Iterationszyklen verringert werden, wenn ein Beginnen von dem oberen oder unteren Grenzwert voraussichtlich eine hohe Anzahl an Iterationen bedingen würde. Ferner besteht hierdurch die Möglichkeit, schnell festzustellen, ob ein Verringern oder Erhöhen des Vermessungsparameterwerts im Rahmen zukünftiger Iterationen den vielversprechendsten Ansatz darstellt. Wird beispielsweise basierend auf dem Ausgangswert festgestellt, dass unmittelbar unzulässige Werte des Prüfmerkmals erhalten werden, kann ein Verändern der Vermessungsparameterwerte derart erfolgen, dass höhere Genauigkeiten erzielbar sind. Das Iterationskriterium kann dann als ein Erhalten von unzulässigen Werten des Prüfmerkmals definiert werden (d. h., es soll zumindest solange eine Werteveränderung stattfinden, bis zulässige Werte erhalten werden). Im Fall der Messgeschwindigkeit würde diese folglich verringert werden, bis zulässige Werte erhalten werden.

Beim Erhalten von zulässigen Werten des Prüfmerkmals basierend auf dem Ausgangswert kann hingegen vorgesehen sein, den Vermessungsparameter zum Erzielen eines höheren Durchsatzes zu verändern und das Iterationskriterium als ein Erhalten von zulässigen Werten zu definieren (d. h. es soll zumindest solange eine Werteveränderung stattfinden, bis unzulässige Werte erhalten werden). Im Fall der Messgeschwindigkeit als Vermessungsparameter kann diese folglich solange erhöht werden, bis unzulässige Prüfmerkmalwerte erhalten werden.

Erfindungsgemäß kann deshalb auch eine gesonderte Maßnahme vorgesehen sein, wonach basierend auf dem Ausgangswert (bzw. den hieraus abgeleiteten Messergebnissen) festgestellt wird, welche Veränderungen im Rahmen der Maßnahme e) und/oder welches Iterationskriterium verwendet werden soll (insbesondere in Form eines Erhaltens von zulässigen oder unzulässigen Werten). Eine solche Funktion ist vorteilhaft, um das Verfahren so weit wie möglich oder auch vollständig zu automatisieren.

Das Verfahren und die Anordnung können deshalb vorsehen, dass basierend auf einer mit dem Ausgangswert erzielbaren Messgenauigkeit festgelegt wird, in welcher Weise der Ausgangswert im Rahmen der Maßnahme e) verändert werden soll und/oder wie das Iterationskriterium definiert wird.

Im Fall eines Ausgangswerts zwischen dem oberen und unteren Grenzwert des Vermessungsparameters kann ferner vorgesehen sein, nach oder auch vor einem Vermessen basierend auf dem Ausgangswert den oberen und/oder Grenzwert als Vermessungsparameterwert zu wählen. So kann sichergestellt werden, dass diese Grenzwerte ebenfalls berücksichtigt werden. Dies kann zum Beispiel dann vorteilhaft sein, wenn bei diesen Werten das Iterationskriterium unmittelbar erfüllt ist und/oder sich für diese Werte ein hoher Durchsatz bei einer ausreichenden Genauigkeit ergibt. Somit kann das Verfahren unter Umständen schneller beendet werden, als wenn man von dem Ausgangswert mit einer Mehrzahl kleinerer Iterationsschritte beginnen würde. Ferner kann hierdurch sichergestellt werden, dass die entsprechenden Grenzwerte in jedem Fall erreicht und überprüft werden, was bei einer reinen Iteration ausgehend von dem Ausgangswert unter Umständen nicht möglich wäre.

Bei einer Weiterbildung des Verfahrens und der Anordnung wird ein Vermessungsparameterwert zum Verwenden für zukünftige Werkstückvermessungen festgelegt, wenn wenigstens eine der folgenden Voraussetzungen erfüllt ist:
- Eine vorgegebene Höchstzahl an Veränderungen des Vermessungsparameterwerts (oder, mit anderen Worten, an Iterationszyklen oder Iterationsvorgängen) wurde erreicht. Anders ausgedrückt kann vorgesehen sein, dass die Anzahl an möglichen Ausführungen der Maßnahme e) durch eine entsprechende Höchstzahl begrenzt ist.
- Ein zulässiger Grenzwert des Vermessungsparameterwerts wurde erreicht oder überschritten. Ein solcher Grenzwert kann insbesondere in Form des bereits geschilderten unteren und/oder oberen Grenzwerts des Vermessungsparameterwerts definiert sein. Mittels dieser Variante kann also sichergestellt werden, dass die vom Benutzer vorgegebenen oder aufgrund der Konfiguration des Koordinatenmessgeräts bedingten Grenzen zuverlässig eingehalten werden.
- Ein Vermessungsparameterwert wurde gewählt, mit dem das Iterationskriterium nach einem vorherigen Nichterfüllen wieder erfüllt ist. Dies betrifft insbesondere die vorstehend geschilderte Variante, wobei nach einem Nichterfüllen des Iterationskriteriums zunächst ein Zwischenwert des Vermessungsparameters gebildet wird, der zwischen den beiden zuletzt betrachteten Vermessungsparameterwerten liegt. Der für zukünftige Vermessungen zu verwendende Vermessungsparameterwert kann (beispielsweise wenn das Iterationskriterium ein Erhalten von zulässigen Prüfmerkmalwerten betrifft) als derjenige Wert festgelegt werden, mit dem das Iterationskriterium erstmals wieder erfüllt wird. Wenn das Iterationskriterium ein Erhalten von unzulässigen Prüfmerkmalwerten betrifft, kann der für zukünftige Vermessungen zu verwendende Vermessungsparameterwert als derjenige Wert gewählt werden, bei dem das Iterationskriterium vor dem erneuten Erfüllen zuletzt nicht erfüllt war (d. h. der letzte Vermessungsparameterwert, der zu zulässigen Prüfmerkmalwerten führte, wird ausgewählt).
- Eine zulässige Gesamtzeitdauer wurde erreicht. Die Gesamtzeitdauer kann diejenige Zeitdauer betreffen, welche für das Ausführen des Verfahrens und insbesondere sämtlicher Iterationszyklen bisher benötigt wurde.
Jegliche der genannten Voraussetzungen kann ein Abbruchkriterium darstellen, das bei einem Erfüllen (der Voraussetzung bzw. des Kriteriums) zu einem Beenden des Verfahrens führt, obwohl z.B. ein aktueller Iterationszyklus noch nicht vollständig beendet wurde.

In diesem Zusammenhang können das Verfahren und die Anordnung ferner vorsehen, dass ein Vermessen an wenigstens einem anderen Werkstück unter Anwenden des in der vorstehend geschilderten Weise festgelegten Vermessungsparameterwerts durchgeführt wird. Insbesondere kann es sich bei dem Werkstück um ein baugleiches Werkstück handeln, z.B. aus einer industriellen Serienfertigung. Der festgelegte Vermessungsparameterwert kann also dazu verwendet werden, um nach einem Ermitteln gemäß einem der vorangehenden Aspekte im Rahmen einer vorzugsweise seriellen oder getakteten Vermessung weitere Werkstücke zu vermessen.

Die Erfindung betrifft ferner eine Anordnung zum Erhöhen des Durchsatzes bei der Werkstückvermessung, mit:
einem Koordinatenmessgerät, das dazu eingerichtet ist, ein Werkstück unter Anwenden wenigstens eines veränderlichen Vermessungsparameters zu vermessen; und
einer Steuereinrichtung, die dazu eingerichtet ist, die folgenden Maßnahmen zu veranlassen oder auszuführen:
   a) Festlegen eines Ausgangswerts für wenigstens einen Vermessungsparameter;
   b) Vermessen eines Werkstücks unter Anwenden des Vermessungsparameters;
   c) Ermitteln eines Werts von wenigstens einem vorbestimmten Prüfmerkmal basierend auf dem Vermessen;
   d) Überprüfen, ob das Prüfmerkmal ein vorbestimmtes Iterationskriterium erfüllt, und wenn dies der Fall ist:
   e) Verändern des Werts des Vermessungsparameters und Wiederholen der Maßnahmen b) bis d).

Die Steuereinrichtung kann daher zumindest eine der folgenden Einrichtungen aufweisen und/oder mit der Einrichtung kombiniert sein:
- eine Festlegungseinrichtung, die ausgestaltet ist, den Ausgangswert für wenigstens einen Vermessungsparameter festzulegen;
- eine Vermessungseinrichtung, die ausgestaltet ist, das Werkstück unter Anwenden des Vermessungsparameters zu vermessen;
- eine Ermittlungseinrichtung, die ausgestaltet ist, den Wert des wenigstens einen vorbestimmten Prüfmerkmals basierend auf dem Vermessen zu ermitteln;
- eine Überprüfungseinrichtung, die ausgestaltet ist zu überprüfen, ob das Prüfmerkmal ein vorbestimmtes Iterationskriterium erfüllt,
- eine Veränderungseinrichtung, die ausgestaltet ist, den Wert des Vermessungsparameters zu verändern.
Ferner ist die Steuereinrichtung insbesondere dazu ausgestaltet, den Ablauf der Maßnahmen zu steuern.

Die Anordnung kann jegliche Weiterbildung und jegliches weitere Merkmal umfassen, um sämtliche der vorstehenden oder nachstehenden Schritte, Betriebszustände und Funktionen bereitzustellen oder auszuführen. Insbesondere kann die Anordnung dazu eingerichtet sein, ein Verfahren gemäß jeglichem der vorstehenden oder nachstehenden Aspekte auszuführen.

Im Folgenden wird eine Ausführungsform der Erfindung anhand der beigefügten schematischen Figuren erläutert. In Ihrer Art und/oder Funktion übereinstimmende Merkmale können dabei ausführungsformübergreifend mit den gleichen Bezugszeichen versehen sein. Es stellen dar:
- Fig. 1:: eine Ansicht einer erfindungsgemäßen Anordnung, mit der erfindungsgemäße Verfahren ausführbar sind;
- Fig. 2a-2b:: eine Darstellung möglicher Vermessungsparameteränderungen und ein Ablaufschema gemäß einem ersten Ausführungsbeispiel;
- Fig. 3a-3b:: eine Darstellung möglicher Vermessungsparameteränderungen und ein Ablaufschema gemäß einem zweiten Ausführungsbeispiel; und
- Fig. 4a-c:: eine Darstellung möglicher Vermessungsparameteränderungen und Ablaufschemata gemäß einem dritten Ausführungsbeispiel

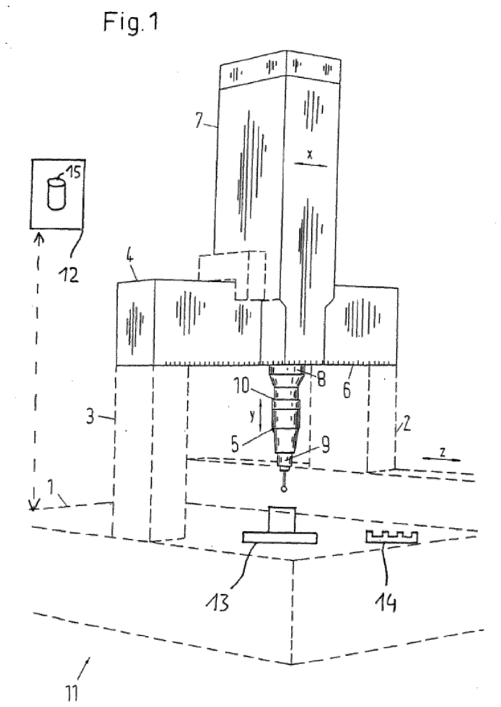

Das in Fig. 1 dargestellte Anordnung 11 umfasst ein Koordinatenmessgerät (KMG) in Portalbauweise, das einen Messtisch 1 aufweist, über dem Säulen 2, 3 verfahrbar sind, die zusammen mit einem Querträger 4 ein Portal des KMG 11 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 (in X-Richtung) beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einer Sensoreinrichtung 5 verbunden ist. An der Sensoreinrichtung 5 ist ein taktil abtastender Tastkopf 9 abnehmbar angeordnet. Anstelle des Tastkopfs 9 könnte die Sensoreinrichtung 5 ebenso einen berührungslos abtastenden Sensor umfassen, insbesondere einen Lasersensor.

Auf dem Messtisch 1 ist ein zusätzlicher drehbarer Messtisch 13 angeordnet, auf dem ein Messobjekt angeordnet werden kann, welches durch Drehung des Messtisches 13 um eine vertikale Drehachse gedreht werden kann. Ferner ist auf dem Messtisch 1 ein Magazin 14 angeordnet, in dem verschiedene Tastköpfe angeordnet werden können, die gegen den Tastkopf 9 ausgetauscht werden können, oder in dem verschiedene Taststifte angeordnet werden können, die gegen den von dem Tastkopf 9 getragenen Taststift ausgetauscht werden können.

Ferner zeigt Fig. 1 schematisch eine Steuerung 12 des KMG, die beispielsweise durch einen Computer realisiert werden kann, der über Software und zumindest einen Datenspeicher 15 verfügt und der über Signal- und Steuerleitungen mit ansteuerbaren Komponenten des Koordinatenmessgerätes verbunden ist, insbesondere mit Antrieben. Außerdem ist die Steuerung 12 über eine Messdatenverbindung mit denjenigen Elementen des KMG verbunden, die zur Ermittlung der Koordinatenmesswerte eingesetzt werden. Da derartige Elemente und Einrichtungen auf dem Gebiet von Koordinatenmessgeräten allgemein bekannt sind, wird hier nicht näher darauf eingegangen.

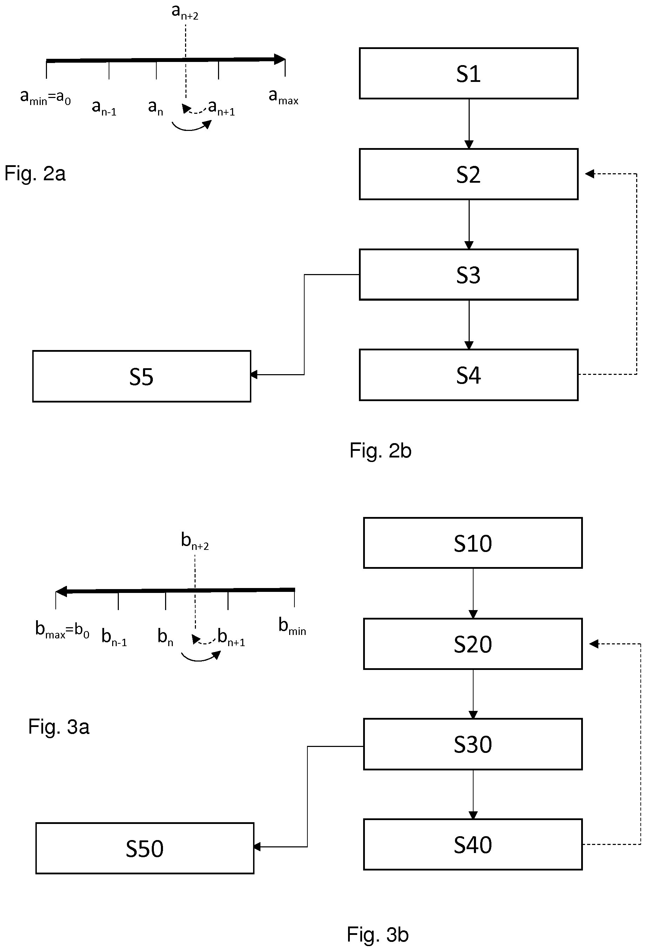

Im Folgenden Bezug nehmend auf die Figuren 2a - 2b wird ein erstes Ausführungsbeispiel eines erfindungsgemäßen Verfahrens geschildert, das mit der Anordnung 11 aus Fig. 1 durchführbar ist. In Fig. 2a sind dabei mögliche Vermessungsparameteränderungen gezeigt, wohingegen Fig. 2b ein Ablaufschema des Verfahrens enthält. Allgemein ist bei diesem Ausführungsbeispiel vorgesehen, einen Vermessungsparameterwert ausgehend von dessen unterem Grenzwert aₘᵢₙ in Richtung von dessen oberen Grenzwert aₘₐₓ standardmäßig zu erhöhen. Dabei wird als Ausgangswert a₀ der untere Grenzwert aₘᵢₙ gewählt. Das Erhöhen erfolgt dabei mit den gleichen Beträgen (z.B. eine Erhöhung um jeweils 10 % gegenüber dem vorangehenden Wert). Als Vermessungsparameter wird die Messgeschwindigkeit betrachtet, die bei einem Erhöhen ausgehend von dem unteren Grenzwert aₘᵢₙ einen höheren Durchsatz ermöglicht, jedoch auch ein zunehmendes Risiko von Messungenauigkeiten bedingt.

Zu betonen ist, dass im Rahmen sämtlicher Beispiele (aber auch der allgemeinen Erfindung) das iterative Verändern der Vermessungsparameterwerte nicht mit den jeweils gleichen Beträgen erfolgen muss. Stattdessen können auch unregelmäßige Abstände zwischen aufeinanderfolgenden Werten vorgesehen sein (z.B. kontinuierlich zunehmende oder abnehmende Abstände über die Gesamtheit der Werte betrachtet). Ein anzuwendender Vermessungsparameterwert kann folglich auch flexibel berechnet und nicht nur gemäß dem stets gleichen Kriterium verändert werden. Beispielsweise kann der Vermessungsparameterwert aus den vorangehenden Werten interpoliert und/oder nach Maßgabe eines hinterlegten funktionalen Zusammenhangs bestimmt werden.

Bezugnehmend auf das Ablaufschema aus Fig. 2b wird in Schritt S1 (bzw. im Rahmen der Maßnahme S1) zunächst der Ausgangswert a₀ des Vermessungsparameters gewählt und, wie bereits erwähnt, als unterer Grenzwert aₘᵢₙ festgelegt. Anschließend erfolgt im Schritt S2 ein Vermessen eines Werkstücks unter Anwenden bzw. nach Maßgabe des Vermessungsparameters mit dem Ausgangswert a₀.

Zu betonen ist, dass dabei zunächst ein Werkstück vermessen wird, dessen Eigenschaften bekannt sind und das insbesondere vorbestimmte Genauigkeitskriterien erfüllt. Es handelt sich demnach um ein Werkstück, das über Prüfmerkmale verfügt, die eine gewünschte Genauigkeit zweifelsfrei erfüllen. Im gezeigten Fall liegt das Werkstück in Form einer Welle vor, die über Querschnittsbereiche mit unterschiedlichen Durchmessern verfügt. Jeder dieser Durchmesser liegt innerhalb einer vorbestimmten Toleranz und weist somit eine gewünschte Genauigkeit auf.
Im Rahmen von Schritt S2 werden die entsprechenden Querschnittsbereiche als Prüfelement des Werkstücks ausgewählt und vermessen. Als Prüfmerkmal wird basierend auf den Messergebnissen im Rahmen des Schritts S3 anschließend eine Formabweichung dieser Bereiche von einem idealen Kreis ermittelt. Als zulässige Toleranz ist eine Formabweichung von nicht mehr als 2,5 µm vorgegeben.

Wie geschildert, erfüllt das Werkstück an sich diese Toleranz. Allerdings kann die Formabweichung bei zu hohen Messgeschwindigkeit unter Umständen nicht mehr korrekt erfasst werden. Stattdessen würden dann Formabweichungen außerhalb der Toleranz ermittelt werden, die aber auf eine ungeeignete Wahl der Messgeschwindigkeit und nicht auf das Werkstück an sich zurückzuführen sind. Das Verfahren sieht deshalb allgemein vor, geeignete Werte der Messgeschwindigkeit zu ermitteln, die einem besonders hohen Durchsatz ermöglichen, aber nach wie vor eine ausreichende Messgenauigkeit ermöglichen.

Im Schritt S3 wird folglich auch überprüft, ob mit dem aktuellen Vermessungsparameterwert ein Messergebnis erzielbar ist, bei dem das Prüfmerkmal der Formabweichung den gewünschten zulässigen Wert von nicht mehr als 2,5 µm aufweist. Das Kriterium, wonach die Formabweichung nicht mehr als 2,5 µm betragen soll, bildet ein Iterationskriterium. Allgemein betrifft das Iterationskriterium somit eine Überprüfung dahingehend, ob mit einem Vermessungsparameterwert zulässige Werte (nicht mehr als 2,5 µm) für ein vorbestimmtes Prüfmerkmal (Formabweichung) erzielbar sind.

Ist dies der Fall, wird im Schritt S4 ein erneuter Iterationszyklus in Gang gesetzt. Hierfür wird der Wert des Vermessungsparameters verändert und im geschilderten Beispiel erhöht. Ausgehend von dem Ausgangswert a₀ erfolgt dabei zunächst eine Erhöhung auf den Wert aₙ₋₁ (siehe Figur 2a). Anschließend werden die Schritt S2 (Vermessen) und S3 (Überprüfen des Iterationskriteriums) basierend auf dem in Schritt S4 veränderten Vermessungsparameterwert erneut ausgeführt (siehe strichlierter Pfeil in Figur 2b). Im gezeigten Beispiel ergeben sich auch für die Messgeschwindigkeit mit dem Wert aₙ₋₁ und auch mit dem im darauffolgenden Zyklus gewählten Wert aₙ zulässige Werte des Prüfmerkmals, sodass das Iterationskriterium jeweils erfüllt ist.

Deshalb wird im Rahmen einer erneuten Iteration die Messgeschwindigkeit noch einmal erhöht, und zwar auf den Wert aₙ₊₁ (siehe Figur 2a). In diesem Fall wird im Rahmen des Schritts S3 jedoch festgestellt, dass das Prüfmerkmal der Formabweichung einen Wert von mehr als 2,5 µm aufweist und deshalb unzulässig hoch ist. Mit anderen Worten ist die Messgeschwindigkeit beim Wert aₙ₊₁ derart hoch, dass sich keine ausreichende Messgenauigkeit mehr erzielen lässt und unzutreffende Messergebnisse bezüglich der Formabweichung erhalten werden. Das im Schritt S3 überprüfte Iterationskriterium ist deshalb nicht erfüllt.

Gemäß einer ersten Variante kann deshalb unmittelbar mit dem Schritt S5 fortgesetzt werden, bei dem der Wert a_{n,} für den das Iterationskriterium zuletzt erfüllt war, als Vermessungsparameterwert festgelegt wird, mit dem zukünftige Vermessungen baugleicher Werkstücke durchgeführt werden sollen. Dieser Wert ermöglicht aufgrund seiner gegenüber dem Ausgangswert a₀ erhöhten Messgeschwindigkeit einen höheren Durchsatz, stellt aber gleichzeitig auch ausreichend genaue Messergebnisse sicher.

Gemäß einer weiteren Variante ist jedoch vorgesehen, einen weiteren Iterationszyklus durchzuführen, wobei im Schritt S4 der Wert der Messgeschwindigkeit auf einen Zwischenwert aₙ₊₂ festgelegt wird, der zwischen den zwei vorangehenden Werten aₙ und aₙ₊₁ liegt (siehe Figur 2a). Genauer gesagt liegt dieser Zwischenwert aₙ₊₂ zwischen derjenigen Messgeschwindigkeit a_{n,} mit der zuletzt das Iterationskriterium erfüllt wurde, und derjenigen Messgeschwindigkeit aₙ₊₁, bei der das Iterationskriterium zum erstem Mal nicht erfüllt wurde.

Wie aus Fig. 2a unmittelbar ersichtlich, bedeutet dies, dass eine gegenüber dem Wert aₙ noch einmal erhöhte Messgeschwindigkeit aₙ₊₂ betrachtet wird, mit der sich gegebenenfalls ein nochmals schnelleres Vermessen und somit ein höherer Durchsatz erzielen lässt. Ob sich mit dieser Messgeschwindigkeit aₙ₊₂ aber auch eine ausreichende Messgenauigkeit erreichen lässt, wird bei einem nochmaligen Durchlaufen der Schritte S2 und S3 überprüft. Wird das Iterationskriterium erfüllt, wird der Wert aₙ₊₂ in Schritt S5 als Vermessungsparameterwert für zukünftige Vermessungsvorgänge festgelegt. Wird das Iterationskriterium nicht erfüllt, wird stattdessen der Wert aₙ als Wert für zukünftige Vermessungsvorgänge festgelegt.

Auch wenn dies nicht gesondert gezeigt ist, können ausgehend vom Wert aₙ₊₂ weitere Iterationen vorgesehen sein, um sich demjenigen Vermessungsparameterwert weiter anzunähern, der den höchsten Durchsatz ermöglicht, aber nach wie vor das Iterationskriterium erfüllt. Hierfür kann der Vermessungsparameterwert abwechselnd erhöht und verringert werden, je nachdem, ob das Iterationskriterium erfüllt ist oder nicht. Insbesondere könnte dann, wenn bei dem Wert aₙ₊₂ das Iterationskriterium erfüllt ist, der Vermessungsparameterwert wieder so oft erhöht werden, bis das Iterationskriterium erstmals nicht mehr erfüllt ist. Anschließend könnte der Vermessungsparameterwert wieder so oft verringert werden, bis das Iterationskriterium wieder erfüllt ist, usw. Dies kann so oft durchgeführt werden, bis eine Höchstzahl an Iterationen erreicht ist. In diesem Fall würde dann derjenige Vermessungsparameterwert gewählt werden, mit dem das Iterationskriterium zuletzt erfüllt wurde und/oder allgemein der höchste Vermessungsparameterwert, mit dem das Iterationskriterium erfüllt wurde.

Im Folgenden wird anhand der Figuren 3a und 3b ein Verfahren gemäß einem weiteren Ausführungsbeispiel geschildert. Die Fig. 3a zeigt dabei wieder mögliche Vermessungsparameteränderungen, während Fig. 3b ein Ablaufschema enthält. Dieses Ausführungsbeispiel unterscheidet sich von dem vorangehenden Beispiel hinsichtlich der durchgeführten Veränderungen des Vermessungsparameters und des betrachteten Iterationskriteriums. Sofern nicht anders angegeben oder ersichtlich, stimmt es bezüglich der weiteren Einzelheiten ansonsten mit dem Verfahren gemäß den Figuren 2a - 2b überein.

Im ersten Schritt S10 wird zunächst der Ausgangswert des Vermessungsparameters b₀ festgelegt. In Abweichung von dem ersten Ausführungsbeispiel wird hierbei jedoch ein oberer Grenzwert bₘₐₓ als Ausgangswert b₀ gewählt. Dieser wird im Schritt S20 dazu verwendet, um ein Werkstück mit erneut vorbekannten Eigenschaften und einer bevorzugten Genauigkeit zu vermessen und das Messergebnis im Schritt S30 hinsichtlich des Erfüllens eines Iterationskriteriums zu überprüfen. Das Iterationskriterium betrifft in diesem Fall das Erreichen von unzulässigen Werten eines Prüfmerkmals. Das Prüfmerkmal ist dabei wiederum als Formabweichung definiert, das unzulässige Werte aufweist, wenn eine Formabweichung von mehr als 2,5 µm festgestellt wird. Das Iterationskriterium ist in diesem Beispiel also immer dann erfüllt, wenn unzulässige Werte mit einer entsprechenden Formabweichung von mehr als 2,5 µm vorliegen. Anders ausgedrückt soll der Vermessungsparameter zumindest solange verändert und sollen zumindest so viele Iterationen durchgeführt werden, bis ein Prüfmerkmal mit zulässigen Werten erhalten wird.

Erneut wird als Vermessungsparameter die Messgeschwindigkeit betrachtet. Liegt diese nahe ihrem oberen Grenzwert bₘₐₓ wird ein hoher Werkstückdurchsatz durch das KMG ermöglicht. Allerdings treten hierbei erwartungsgemäß zu hohe Ungenauigkeiten auf, mit denen sich keine zulässigen Werte hinsichtlich des gewählten Prüfmerkmals erfassen lassen. Deshalb soll durch das Iterationskriterium sichergestellt werden, dass die Messgeschwindigkeit standardgemäß und sukzessive verringert wird, bis zulässige Werte des Prüfmerkmals erfassbar sind.

Für das gezeigte Beispiel wird bei dem Ausgangswert b₀ im Schritt S30 ermittelt, dass das Iterationskriterium erfüllt ist, da eine Formabweichung von mehr als 2,5 µm und somit ein unzulässiger Wert erhalten wird. Da das Iterationskriterium somit erfüllt ist, wird daraufhin der Schritt S40 ausgeführt. In diesem Schritt wird der Vermessungsparameterwert b₀ verändert, und zwar dadurch, dass er gegenüber dem Ausgangswert b₀ auf einen Wert bₙ₋₁ verringert wird (siehe Figur 3a). Anschließend kehrt das Verfahren zum Schritt S20 zurück, um das Werkstück nach Maßgabe dieses neuen Vermessungsparameterwertes bₙ-₁ zu vermessen (siehe strichlierter Pfeil in Fig. 3b). Daraufhin wird eine neue Abfolge der Schritte S20, S30 und S40 ausgeführt. Für den darauffolgenden Wert bₙ ist das Iterationskriterium ebenfalls erfüllt. Im Schritt S40 wird deshalb der Wert weiter verringert, und zwar auf den Wert bₙ₊₁. für diesen Wert wird im Schritt S30 jedoch festgestellt, dass das Iterationskriterium nicht erfüllt ist, da ein zulässiger Wert der Formabweichung von weniger als 2,5 µm erhalten wurde. Prinzipiell könnte deshalb vorgesehen sein, gemäß dem Schritt S50 das Verfahren unmittelbar zu beenden und den Wert bₙ₊₁ als Vermessungsparameterwert für zukünftige Messvorgänge festzulegen. Mit diesem Wert, bei dem es sich um den ersten Wert handelt, mit dem das Iterationskriterium nicht erfüllt wurde, lässt sich ein hoher Durchsatz aber auch eine ausreichende Messgenauigkeit erzielen.

Um aber einen noch höheren Durchsatz zu ermöglichen, kann alternativ vorgesehen sein, den Schritt S40 erneut auszuführen und den Wert bₙ₊₁, bei dem das Iterationskriterium erstmals nicht erfüllt war, zu erhöhen. Das Erhöhen erfolgt dabei in der Weise, dass ein Zwischenwert bₙ₊₂ erhalten wird, der zwischen dem Wert b_{n,} für den das Iterationskriterium zuletzt erfüllt war, und dem Wert bₙ₊₁ liegt, für den das Iterationskriterium erstmals nicht erfüllt war.

Wird festgestellt, dass der Wert bₙ₊₂ das Iterationskriterium ebenfalls nicht erfüllt, da auch für ihn zulässige Werte für das Prüfmerkmal erhalten werden, kann dieser Wert bₙ₊₂ als Vermessungsparameterwert für zukünftige Werkstückvermessungen festgelegt werden. Wird mit dem Wert bₙ₊₂ das Iterationskriterium jedoch erfüllt (d. h. werden erneut unzulässige Werte des Prüfmerkmals erhalten), kann dieser noch einmal verringert werden, vorzugsweise aber in der Weise, dass ein darauffolgender und nicht gesondert dargestellter Wert bₙ₊₃ zwischen den Werten bₙ₊₂ und bₙ₊₁ liegt. Dies kann beliebig oft wiederholt werden, um denjenigen Vermessungsparameterwert anzunähern, mit dem der höchste Durchsatz bei einer noch ausreichenden Genauigkeit erzielbar ist. Alternativ kann das Verfahren beendet werden, wenn eine vorgegebene Höchstanzahl an Iterationen bzw. Werkstückparameteränderungen gemäß Schritt S40 erreicht wurde.

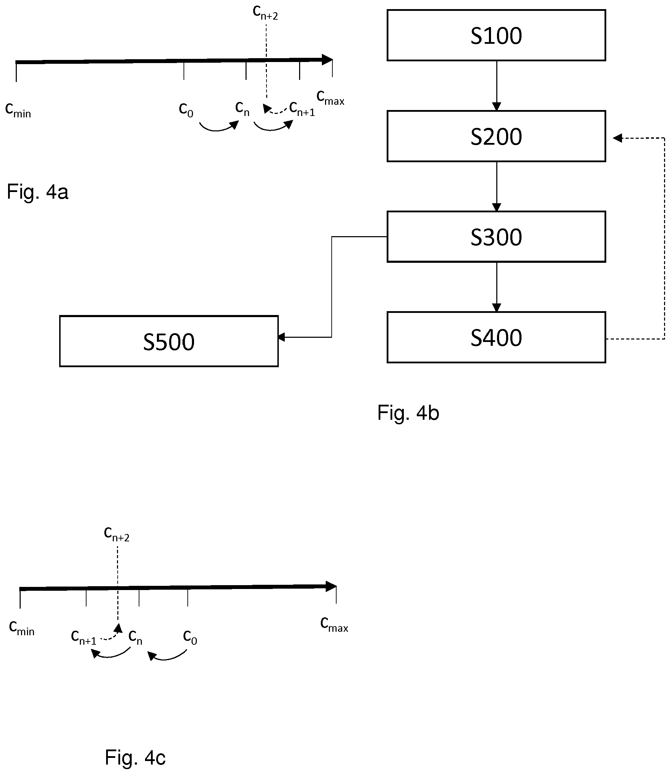

Im Folgenden wird ein weiteres Ausführungsbeispiel anhand der Figuren 4a - 4c erläutert. Die Fig. 4a und Fig. 4c stellen dabei wiederum Diagramme zum Erläutern möglicher Werteänderungen des Vermessungsparameters dar, während in Fig. 4b ein Ablaufschema des Verfahrens gezeigt ist. Das Verfahren dieses Beispiels unterscheidet sich vorangehenden Beispielen hauptsächlich hinsichtlich der Festlegung des Ausgangswertes. Sofern nicht anders angegeben oder ersichtlich, stimmt das Verfahren ansonsten mit den vorangehenden Beispielen überein.

Zunächst Bezug nehmend auf Fig. 4a erkennt man, dass der Ausgangswert c₀ im Schritt S100 aus Fig. 4b nicht als einer der Grenzwerte cₘᵢₙ oder cₘₐₓ gewählt wird. Stattdessen wird er als Mittelwert zwischen diesen Grenzwerten cₘᵢₙ, cₘₐₓ festgelegt, wobei auch andere Werte zwischen den Grenzwerten cₘᵢₙ, cₘₐₓ möglich sind. Im Schritt S200 wird basierend auf diesem Ausgangswert c₀ ein Werkstück, das erneut über bekannte Eigenschaften und insbesondere eine bevorzugte Genauigkeit verfügt, erstmals vermessen. Im Schritt S300 wird dann überprüft, ob sich mit dem Wert c₀ das Prüfmerkmal einer Formabweichung einen gewünschten zulässigen Wert aufweist oder nicht.

Im gezeigten Fall handelt es sich bei dem Vermessungsparameter wiederum um die Messgeschwindigkeit. Im Fall von Fig. 4a wird für den Wert c₀ im Schritt S300 festgestellt, dass sich mit dieser Messgeschwindigkeit eine ausreichende Genauigkeit erzielen lässt.

Bei dem erstmaligen Ausführen des Schritts S300 und bei dem geschilderten Erreichen der gewünschten Messgenauigkeit wird deshalb festgelegt, dass der Vermessungsparameter in einer den Durchsatz steigernden Weise verändert werden soll und dass das Iterationskriterium das Erhalten von zulässigen Werten des Prüfmerkmals betrifft. Genauer gesagt wird festgelegt, dass das Iterationskriterium das Erhalten einer Formabweichung von nicht mehr als 2,5 µm betrifft.

Im Schritt S400 wird daraufhin der Wert c₀ auf c₁ erhöht, was prinzipiell einen höheren Durchsatz bei einer seriellen Vermessung mehrerer Werkstücke ermöglichen würde. Anschließend wird gemäß dem strichlierten Fall aus Fig. 4b eine erneute Vermessung S200 des Werkstücks durchgeführt und im Schritt S300 das Iterationskriterium erneut überprüft.

Da dieses wiederum erfüllt ist, wird in einem weiteren Schritt S400 die Messgeschwindigkeit auf den Wert cₙ₊₁ erhöht. Daraufhin wird jedoch im Schritt S300 festgestellt, dass sich mit dieser Messgeschwindigkeit keine ausreichende Genauigkeit mehr erzielen lässt. Analog zu dem vorigen Beispiel könnte dann die zuletzt zulässige Messgeschwindigkeit im Schritt S500 als Messgeschwindigkeit für zukünftige Werkstückvermessungen festgelegt werden. Alternativ kann versucht werden, die Messgeschwindigkeit mit dem höchsten Durchsatz bei einer noch ausreichenden Genauigkeit weiter anzunähern und hierfür den Wert cₙ₊₁ noch einmal auf einen Zwischenwert cₙ₊₂ zu verringern und analog zu den vorangehenden Beispielen fortzufahren.

Der Vollständigkeit halber sei erwähnt, dass in dem vorigen Beispiel ein im Schritt S400 neu gewählter Wert jeweils als Mittelwert zwischen den ihn eingrenzenden Werten, einschließlich der Grenzwerte gewählt werden kann. Der Wert cₙ kann beispielsweise als Mittelwert zwischen c₀ und cₘₐₓ gewählt werden (cₙ=[(c₀-cₘₐₓ/2]⁴). Gleiches gilt für den Wert cₙ₊₁, der als Mittelwert zwischen cₙ und cₘₐₓ gewählt werden kann (cₙ=[(cₙ-cₘₐₓ)/2]⁴).

Ferner könnte in diesem Fall (aber auch bei der nachfolgenden Fig. 4c) vorgesehen sein, zunächst den oberen und/oder unteren Grenzwert cₘᵢₙ, cₘₐₓ für ein Vermessen zu verwenden. Andernfalls kann sich ein Messverlauf einstellen, bei dem diese Grenzwerte cₘᵢₙ, cₘₐₓ gar nicht erreicht werden. Durch anfängliches Überprüfen der Grenzwerte cₘᵢₙ, cₘₐₓ kann zudem ausgeschlossen werden, dass eine gesuchte optimale Lösung mit diesen Werten zusammenfällt und daher eine genauere Iteration ausgehend von dem Ausgangswert c₀ unter Umständen gar nicht mehr erforderlich ist.

Fig. 4c zeigt die Situation, wenn festgestellt wird, dass für den Ausgangswert c₀ keine ausreichende Messgenauigkeit erzielbar ist (d.h. es wurden Formabweichungen von mehr als 2,5 µm erfasst). Bei einem erstmaligen Ausführen des Schritts S300 wird daraufhin festgelegt, dass der Vermessungsparameter in einer eine höhere Messgenauigkeit ermöglichenden Weise verändert werden soll (d. h. die Messgeschwindigkeit zu verringern ist). Ferner wird festgelegt, dass das Iterationskriterium das Erhalten von nicht zulässigen Werten des Prüfmerkmals der Formabweichung betrifft (d. h. es sollen zumindest Vermessungsparameteränderungen stattfinden, bis zulässige Werte erhalten werden). Im Schritt S400 wird deshalb die Geschwindigkeit verringert und erneut ein Vermessen und Überprüfen gemäß den Schritten S200 und S300 ausgeführt.

Im Fall von Fig. 4c ist das Iterationskriterium auch für den nächsten Vermessungsparameterwert cₙ erfüllt, nicht jedoch für den darauffolgenden Wert cₙ₊₁. Da sich mit dem Wert cₙ₊₁ zulässige Formabweichungen ergeben, könnte dieser gemäß Schritt S500 aus Fig. 4b unmittelbar zum Verwenden bei zukünftigen Werkstückvermessungen festgelegt werden. Analog wie anhand von Fig. 3a vorstehend erläutert, kann dieser Wert jedoch auch noch einmal erhöht werden, nämlich auf den Zwischenwert cₙ₊₂, der zwischen den Werten cₙ und cₙ₊₁ liegt. Hierdurch kann versucht werden, die Messgeschwindigkeit mit dem höchsten Durchsatz bei einer noch ausreichenden Genauigkeit weiter anzunähern.

Auch in diesem Fall können die Vermessungsparameterwerte dabei jeweils derart gewählt werden, dass sie einen Mittelwert zwischen ihren eingrenzenden Werten bilden, wie vorstehend im Zusammenhang mit Figur 4a erläutert.

Es versteht sich, dass die vorstehenden Beispiele auch in kombinierter Weise auf ein einzelnes Werkstück angewandt werden können. Weist ein Werkstück z.B. zwei zu vermessende Bereiche bzw. Prüfelemente auf, kann für den ersten Bereich eine Parametererhöhung gemäß dem ersten Beispiel (siehe Fig. 2a, Fig. 2b) und für den zweiten Bereich eine Parameterverringerung gemäß dem zweiten Beispiel ausgeführt werden (siehe Fig. 3a, Fig. 3b).

Ebenso kann der Fall eintreten, dass je zu vermessendem Bereich bzw. Prüfelement eines einzelnen Werkstücks unterschiedliche Iterationsstadien vorliegen. Beispielsweise kann für einen ersten zu vermessenden Werkstückbereich noch eine sukzessive Erhöhung des Vermessungsparameters erfolgen, wie beispielsweise zwischen den Werten aₙ₋₁ und aₙ aus dem ersten Beispiel. Für den zweiten Bereich kann jedoch das Iterationskriterium bereits nicht mehr erfüllt worden sein, sodass dort ein Zwischenwert gemäß dem Wert aₙ₊₂ aus Fig. 2a gewählt wird. Folglich kann für einen Bereich die Messgeschwindigkeit noch weiter erhöht werden, während für einen zweiten Bereich die Messgeschwindigkeit zumindest geringfügig verringert wird.

Weiterhin versteht es sich, dass für ein gegebenes Werkstück nicht nur eine Wertewahl für einen einzelnen Vermessungsparameter in der vorstehend geschilderten Weise ausgeführt werden kann. Stattdessen können nach der geschilderten Festlegung eines geeigneten Messgeschwindigkeitswerts auch andere Vermessungsparameter betrachtet werden, beispielsweise eine Antastkraft oder eine Beschleunigung.

Ferner könnte man auch den Kehrwert der Geschwindigkeit als einen Vermessungsparameter betrachten, der dann möglichst verringert werden müsste, um zulässige Werte zu erhalten.

Die durch jegliches der vorstehenden Beispiele ermittelten Vermessungsparameterwerte, welche schlussendlich für das zukünftige Vermessen baugleicher Werkstücke festgelegt wurden, können ferner für spätere Verwendung abgespeichert werden. Insbesondere können diese lokal in dem Datenspeicher 15 des KMG abgespeichert werden oder allgemein in einem sogenannten Prüfplan.

Zusätzlich oder alternativ kann ein Protokoll über die Parametermittelung erstellt werden, auf dessen Basis ein Anwender weitere Informationen erhalten kann und/oder eine Datenbank erstellen kann.

## Patentansprüche

1. Verfahren zum Erhöhen des Durchsatzes bei der seriellen Werkstückvermessung mit einem Koordinatenmessgerät und bei einer ausreichenden Messgenauigkeit,
wobei das Koordinatenmessgerät dazu eingerichtet ist, ein Werkstück zu vermessen, wobei die Vermessung durch wenigstens einen Vermessungsparameter beschreibbar ist, dessen Wert veränderlich ist,
und wobei das Verfahren umfasst:
a) Festlegen eines Ausgangswerts (a₀, b₀, c₀) des wenigstens einen Vermessungsparameters;
b) Vermessen eines Werkstücks, wobei ein festgelegter Wert des wenigstens einen Vermessungsparameters gültig ist;
c) Ermitteln eines Werts von wenigstens einem vorbestimmten Prüfmerkmal basierend auf Ergebnissen des Vermessens;
d) Überprüfen, ob das wenigstens eine Prüfmerkmal ein vorbestimmtes Iterationskriterium erfüllt, wobei das Iterationskriterium das Erhalten oder Nichterhalten akzeptabler oder zulässiger Werte des Prüfmerkmals betrifft;
und wenn dies der Fall ist:
e) Verändern und somit Festlegen des Werts des Vermessungsparameters oder Verändern und somit Festlegen des Werts zumindest eines der Vermessungsparameter und Wiederholen der Maßnahmen b) bis d).

2. Verfahren nach Anspruch 1,
wobei dann, wenn das Iterationskriterium erfüllt ist, der Wert des Vermessungsparameters im Rahmen der Maßnahme e) erhöht wird.

3. Verfahren nach Anspruch 2,
wobei das Iterationskriterium erfüllt ist, wenn ein zulässiger Wert des Prüfmerkmals ermittelt wird.

4. Verfahren nach Anspruch 1,
wobei dann, wenn das Iterationskriterium erfüllt ist, der Wert des Vermessungsparameters im Rahmen der Maßnahme e) verringert wird.

5. Verfahren nach Anspruch 4,
wobei das Iterationskriterium erfüllt ist, wenn ein unzulässiger Wert des Prüfmerkmals ermittelt wird.

6. Verfahren nach einem der vorangehenden Ansprüche,
wobei dann, wenn im Rahmen der Maßnahme d) ein Nichterfüllen des Iterationskriteriums festgestellt wird, der Wert des Vermessungsparameters wenigstens einmal erneut verändert und dabei vorzugsweise ein Vermessungsparameterwert gewählt wird, der zwischen dem das Iterationskriterium nicht erfüllenden Vermessungsparameterwert und demjenigen Vermessungsparameterwert liegt, bei dem das Iterationskriterium zuletzt erfüllt war.

7. Verfahren nach einem der vorangehenden Ansprüche,
wobei der Ausgangswert (a₀, b₀, c₀) zwischen einem vorbestimmten unteren Grenzwert (aₘᵢₙ, bₘᵢₙ, cₘᵢₙ) für den Vermessungsparameter und einem vorbestimmten oberen Grenzwert (aₘₐₓ, bₘₐₓ, cₘₐₓ) für den Vermessungsparameter liegt.

8. Verfahren nach Anspruch 7,
wobei basierend auf einer mit dem Ausgangswert erzielbaren Messgenauigkeit festgelegt wird, in welcher Weise der Ausgangswert im Rahmen der Maßnahme e) verändert werden soll und/oder wie das Iterationskriterium definiert wird.

9. Verfahren nach einem der vorangehenden Ansprüche,
wobei ein Vermessungsparameterwert zum Verwenden für zukünftige Werkstückvermessungen festgelegt wird, wenn wenigstens eine der folgenden Voraussetzungen erfüllt ist:
- eine vorgegebene Höchstzahl an Veränderungen des Vermessungsparameterwerts wurde erreicht;
- ein zulässiger Grenzwert (aₘᵢₙ, bₘᵢₙ, cₘᵢₙ; aₘₐₓ, bₘₐₓ, cₘₐₓ) des Vermessungsparameters wurde erreicht oder überschritten;
- ein Vermessungsparameterwert wurde gewählt, mit dem das Iterationskriterium nach einem vorherigen Nichterfüllen wieder erfüllt ist;
- eine zulässige Gesamtzeitdauer wurde erreicht.

10. Anordnung (11) zum Erhöhen des Durchsatzes bei der Werkstückvermessung, bei einer ausreichenden Messgenauigkeit, mit:
einem Koordinatenmessgerät, das dazu eingerichtet ist, ein Werkstück zu vermessen, wobei die Vermessung durch wenigstens einen Vermessungsparameter beschreibbar ist, dessen Wert veränderlich ist; und
einer Steuereinrichtung, die dazu eingerichtet ist, die folgenden Maßnahmen zu veranlassen oder auszuführen:
a) Festlegen eines Ausgangswerts (a₀, b₀, c₀) des wenigstens einen Vermessungsparameters;
b) Vermessen eines Werkstücks, wobei ein festgelegter Wert des wenigstens einen Vermessungsparameters gültig ist;
c) Ermitteln eines Werts von wenigstens einem vorbestimmten Prüfmerkmal basierend auf Ergebnissen des Vermessens;
d) Überprüfen, ob das wenigstens eine Prüfmerkmal ein vorbestimmtes Iterationskriterium erfüllt, wobei das Iterationskriterium das Erhalten oder Nichterhalten akzeptabler oder zulässiger Werte des Prüfmerkmals betrifft;
und wenn dies der Fall ist:
e) Verändern und somit Festlegen des Werts des Vermessungsparameters oder Verändern und somit Festlegen des Werts zumindest eines der Vermessungsparameter und Wiederholen der Maßnahmen b) bis d).

## Claims

1. Method for increasing the throughput in serial workpiece measurement by a coordinate measuring machine with sufficient measuring accuracy,
wherein the coordinate measuring machine is configured to measure a workpiece, the measurement being definable by at least one measurement parameter, the value of which is variable,
and wherein the method comprises:
a) setting an initial value (a₀, b₀, c₀) of the at least one measurement parameter;
b) measuring a workpiece, a set value of the at least one measurement parameter applying;
c) determining a value of at least one predetermined test characteristic based on results of the measurement;
d) checking whether the at least one test characteristic satisfies a predetermined iteration criterion, the iteration criterion concerning the obtainment or non-obtainment of acceptable or admissible values of the test characteristic; and if this is the case
e) changing, and consequently setting, the value of the measurement parameter or changing, and consequently setting, the value of at least one of the measurement parameters and repeating measures b) to d).

2. Method according to Claim 1,
wherein, whenever the iteration criterion is satisfied, the value of the measurement parameter is increased in the course of measure e).

3. Method according to Claim 2,
wherein the iteration criterion is satisfied if an admissible value of the test characteristic is determined.

4. Method according to Claim 1,
wherein, whenever the iteration criterion is satisfied, the value of the measurement parameter is reduced in the course of measure e).

5. Method according to Claim 4,
wherein the iteration criterion is satisfied if an inadmissible value of the test characteristic is determined.

6. Method according to one of the preceding claims,
wherein, whenever it is established in the course of measure d) that the iteration criterion is not satisfied, the value of the measurement parameter is once again changed at least once and preferably a measurement parameter value that lies between the measurement parameter value that does not satisfy the iteration criterion and the measurement parameter value for which the iteration criterion was last satisfied is thereby chosen.

7. Method according to one of the preceding claims,
wherein the initial value (a₀, b₀, c₀) lies between a predetermined lower limit value (aₘᵢₙ, bₘᵢₙ, cₘᵢₙ) for the measurement parameter and a predetermined upper limit value (aₘₐₓ, bₘₐₓ, cₘₐₓ) for the measurement parameter.

8. Method according to Claim 7,
wherein it is established on the basis of a measuring accuracy achievable with the initial value in what way the initial value is to be changed in the course of measure e) and/or how the iteration criterion is defined.

9. Method according to one of the preceding claims,
wherein a measurement parameter value to be used in future workpiece measurements is set if at least one of the following preconditions is satisfied:
- a prescribed highest number of changes of the measurement parameter has been reached;
- an admissible limit value (aₘᵢₙ, bₘᵢₙ, cₘᵢₙ; aₘₐₓ, bₘₐₓ, cₘₐₓ) of the measurement parameter has been reached or exceeded;
- a measurement parameter value with which the iteration criterion is satisfied again after a prior failure to satisfy it has been chosen;
- an admissible overall time period has been reached.

10. Arrangement (11) for increasing the throughput in workpiece measurement with sufficient measuring accuracy, comprising:
a coordinate measuring machine, which is configured to measure a workpiece, the measurement being definable by at least one measurement parameter, the value of which is variable; and
a controller, which is configured to instigate or perform the following measures:
a) setting an initial value (a₀, b₀, c₀) of the at least one measurement parameter;
b) measuring a workpiece, a set value of the at least one measurement parameter applying;
c) determining a value of at least one predetermined test characteristic based on results of the measurement;
d) checking whether the at least one test characteristic satisfies a predetermined iteration criterion, the iteration criterion concerning the obtainment or non-obtainment of acceptable or admissible values of the test characteristic; and if this is the case
e) changing, and consequently setting, the value of the measurement parameter or changing, and consequently setting, the value of at least one of the measurement parameters and repeating measures b) to d).

## Revendications

1. Procédé pour augmenter la cadence lors du mesurage en série de pièces ouvrées avec un appareil de mesure de coordonnées et avec une précision de mesure suffisante,
l'appareil de mesure de coordonnées étant conçu pour mesurer une pièce ouvrée, le mesurage pouvant être décrit par au moins un paramètre de mesurage dont la valeur est variable,
et le procédé comprenant :
a) la fixation d'une valeur initiale (a₀, b₀, c₀) de l'au moins un paramètre de mesurage ;
b) la mesurage d'une pièce ouvrée, une valeur fixée de l'au moins un paramètre de mesurage étant applicable ;
c) l'identification d'une valeur d'au moins une caractéristique de contrôle prédéterminée en se basant sur les résultats du mesurage ;
d) la vérification si l'au moins une caractéristique de contrôle satisfait à un critère d'itération prédéterminé, le critère d'itération concernant l'obtention ou la non-obtention de valeurs acceptables ou admissibles de la caractéristique de contrôle ; et
lorsque cela est le cas :
e) la modification et ainsi la fixation de la valeur du paramètre de mesurage ou la modification et ainsi la fixation de la valeur d'au moins l'un des paramètres de mesurage et la répétition des mesures b) à d).

2. Procédé selon la revendication 1, selon lequel, lorsque le critère d'itération est satisfait, la valeur du paramètre de mesurage est augmentée dans le cadre de la mesure e).

3. Procédé selon la revendication 2, selon lequel le critère d'itération est satisfait lorsqu'une valeur admissible de la caractéristique de contrôle est identifiée.

4. Procédé selon la revendication 1, selon lequel, lorsque le critère d'itération est satisfait, la valeur du paramètre de mesurage est réduite dans le cadre de la mesure e).

5. Procédé selon la revendication 4, selon lequel le critère d'itération est satisfait lorsqu'une valeur non admissible de la caractéristique de contrôle est identifiée.

6. Procédé selon l'une des revendications précédentes, selon lequel, s'il est constaté dans le cadre de la mesure d) que le critère d'itération n'est pas satisfait, la valeur du paramètre de mesurage est de nouveau modifiée au moins une fois et une valeur du paramètre de mesurage qui est à cet effet de préférence choisie se situe entre la valeur du paramètre de mesurage qui ne satisfait pas au critère d'itération et la valeur du paramètre de mesurage avec laquelle le critère d'itération était la dernière fois satisfait.

7. Procédé selon l'une des revendications précédentes, selon lequel la valeur initiale (a₀, b₀, c₀) est comprise entre une valeur limite basse (aₘᵢₙ, bₘᵢₙ, cₘᵢₙ) prédéterminée pour le paramètre de mesurage et une valeur limite haute (aₘₐₓ, bₘₐₓ, cₘₐₓ) prédéterminée pour le paramètre de mesurage.

8. Procédé selon la revendication 7, selon lequel la manière dont la valeur initiale doit être modifiée dans le cadre de la mesure e) et/ou comment le critère d'itération sera défini sont fixés en se basant sur une précision de mesure pouvant être atteinte avec la valeur initiale.

9. Procédé selon l'une des revendications précédentes, selon lequel une valeur du paramètre de mesurage destinée à être utilisée pour les futurs mesurages de la pièce ouvrée est fixée lorsqu'au moins l'une des conditions suivantes est remplie :
- un nombre maximal prédéfini de modifications de la valeur du paramètre de mesurage a été atteint ;
- une valeur limite admissible (aₘᵢₙ, bₘᵢₙ, cₘᵢₙ ; aₘₐₓ, bₘₐₓ, cₘₐₓ) du paramètre de mesurage a été atteinte ou dépassée ;
- une valeur du paramètre de mesurage a été choisie avec laquelle le critère d'itération est de nouveau satisfait après ne pas avoir été satisfait précédemment ;
- une durée totale admissible a été atteinte.

10. Arrangement (11) pour augmenter la cadence lors du mesurage de pièces ouvrées avec une précision de mesure suffisante, comprenant :
un appareil de mesure de coordonnées qui est conçu pour mesurer une pièce ouvrée, le mesurage pouvant être décrit par au moins un paramètre de mesurage dont la valeur est variable ; et
un dispositif de commande qui est conçu pour provoquer ou exécuter les mesures suivantes :
a) fixation d'une valeur initiale (a₀, b₀, c₀) de l'au moins un paramètre de mesurage ;
b) mesurage d'une pièce ouvrée, une valeur fixée de l'au moins un paramètre de mesurage étant applicable ;
c) identification d'une valeur d'au moins une caractéristique de contrôle prédéterminée en se basant sur les résultats du mesurage ;
d) vérification si l'au moins une caractéristique de contrôle satisfait à un critère d'itération prédéterminé, le critère d'itération concernant l'obtention ou la non-obtention de valeurs acceptables ou admissibles de la caractéristique de contrôle ; et lorsque cela est le cas :
e) modification et ainsi fixation de la valeur du paramètre de mesurage ou modification et ainsi fixation de la valeur d'au moins l'un des paramètres de mesurage et répétition des mesures b) à d).
